## Europäisches Patentamt

**European Patent Office**

**Office européen des brevets**

(11) Publication number: **0 105 562**
**B1**

(12) **EUROPEAN PATENT SPECIFICATION**

(45) Date of publication of patent specification: **30.12.86**

(51) Int. Cl.⁴: **C 08 L 55/02, C 08 K 5/10**

(21) Application number: **83201383.3**

(22) Date of filing: **28.09.83**

(54) Polymer composition.

(30) Priority: **30.09.82 NL 8203796**

(43) Date of publication of application:
**18.04.84 Bulletin 84/16**

(45) Publication of the grant of the patent:
**30.12.86 Bulletin 86/52**

(84) Designated Contracting States:
**AT BE CH DE FR GB IT LI NL SE**

(56) References cited:
**GB-A-1 287 338**

(73) Proprietor: **STAMICARBON B.V.**
**Mijnweg 1**
**NL-6167 AC Geleen (NL)**

(72) Inventor: **Frencken, Eduard Jozef**
**van Oldenbarneveldstraat 22**
**NL-6181 BD Elsloo (L.) (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

# 0 105 562

**Description**

The invention relates to a polymer composition based on a graft copolymer obtained by polymerization of a vinylaromatic compound and an unsaturated nitrile compound in the presence of a rubber, and optionally a copolymer of a vinylaromatic compound and an unsaturated nitrile compound.

Graft copolymers obtained by polymerization of styrene and acrylonitrile in the presence of a rubber (ABS) are well-known from literature. Compositions on the basis of such graft copolymers have many attractive properties, such as high impact strength, good mouldability and gloss.

It has, however, been found that ABS polymer compositions may present problems when articles having a complicated shape are manufactured, for sometimes it is difficult for the article moulded to be released from the mould. In certain sectors of industry, where products having a complicated form are manufactured, this may be a disadvantage.

It is one of the aims of the invention to provide a polymer composition combining the attractive properties mentioned above with good release properties.

According to the invention such a polymer composition is characterized in that it contains between 0.05 and 5 wt.% relative to the total weight of the polymer composition of an ester of an alcohol with a chain of 1—20 carbon atoms and a fatty acid with a chain of 22—30 carbon atoms.

Surprisingly, it has been found that the polymer composition according to the invention possesses very good release properties while retaining its impact strength and heat resistance.

The effect of the application of such an ester is all the more surprising since a known lubricant such as ethylene bisstearylamide does bring about some improvement of the release when used in a relatively large quantity, but this is attended by a deterioration of the heat resistance of the polymer composition.

Naturally, a reduced heat resistance limits the applicability of the composition.

The quantity of ester yielding the effect aimed at according to the invention is between 0.05 and 5 wt.-% relative to the total weight of the polymer composition; preference is given to a quantity of 1.0—2.0 wt.-% relative to the total weight of the polymer composition.

The ester preferably applied according to the invention has an alcohol residue with 10—20 carbon atoms and an acid residue with 22—30 carbon atoms. A compound that is particularly preferred is stearylbehenate.

In commercial applications of this type of compound, the starting material generally is not a fully pure compound but rather a mixture of a number of homologues. In referring to such a mixture the name of its main component is used. In the case of stearylbehenate, the component indicated by 'stearyl' may also contain a quantity of 'cetyl' and other homologues. The same applies to the 'behenate'.

United States Patent 3,532,660 describes the use of a compound referred to as lubricant which is added to a polymer composition in a synergistic mixture with a stabilizer known in itself, the object being to stabilize the composition with respect to heat and light effects. This compound, referred to as lubricant and used as stabilizer, is an ester of an alcohol (with a branched or straight chain) of 1—20 carbon atoms and a fatty acid (with a branched or straight chain) of 11—21 carbon atoms.

In British patent specification 1.287.338 an ABS composition is described in which, to improve the processing behaviour, a diethanol amide of a fatty acid and an alkyl ester of a fatty acid with 6—35 carbon atoms are incorporated. According to the examples n-butylstearate is applied.

The addition of stearylstearate to a polymer composition obtained by polymerization of a vinylaromatic compound and an unsaturated nitrile compound in the presence of a rubber, and optionally a copolymer of a vinylaromatic compound and an unsaturated nitrile compound, however, does not have the effect aimed at by the subject invention. It is, therefore, surprising that the addition to such a polymer composition of, for instance, stearylbehenate, which from a chemical point of view differs only little from stearylstearate, should have as a result that the heat resistance is retained while the release properties are improved.

In this context it is remarked that the polymer composition according to the invention particularly has an effect on the problems relating to shrinking of the article, for instance around a certain part of the mould.

An added advantage of the use of an ester according to the subject invention is that it allows of better pigment dispersion, which in its turn improves the impact resistance.

ABS polymers are well-known by themselves. Descriptions can be found, for instance, in United States patents 3,509,237 and 3,509,238. An extensive treatise on ABS polymers is presented by C. H. Basdekis in 'ABS-Plastics', (Rheinhold-1964).

In general, ABS polymers are understood to be graft copolymers obtained by polymerization of styrene and acrylonitrile in the presence of a rubber. In addition, these graft copolymers are often mixed with a copolymer of acrylonitrile and styrene.

It is also possible to mix the graft copolymer with a copolymer of acrylonitrile and α-methylstyrene, which is common practice for ABS polymers that are to meet increased heat resistance requirements. Mixing of graft copolymers the constituent components of which are present in varying proportions and/or in which other monomers besides styrene and acrylonitrile have been polymerized, also yields products covered by the term 'ABS'. It is also possible to replace styrene and/or acrylonitrile in whole or in part by their derivatives or by other acryl compounds such as methyl methylacrylate.

Thanks to their good impact resistance, mouldability and high gloss, ABS polymers are widely applied in many fields. In some applications it has been found desirable to adapt the polymer compositions to specific requirements. In the automotive industry, for instance, a good heat resistance is desired. To this purpose additives of all sorts can be mixed with ABS. Known additives are lubricants such as ethylene bisstearylamide and stabilizers such as di-stearylthio-di-propionate.

It is also possible to adapt the properties of ABS polymers by mixing with other polymers such as polycarbonate, polyvinylchloride and polystyrene/rubber etc.

In a preferred embodiment of the invention the polymer composition contains 10—90 wt.-% of one or more copolymers of 20—40 wt.-% acrylonitrile and 60—80 wt.-% α-methylstyrene.

A second preferred embodiment comprises:

A. One or more graft copolymers, each obtained by polymerization of
20—80 parts by weight of a monomer mixture consisting of:
20—40 wt.-% acrylonitrile,
50—80 wt.-% styrene and
0—30 wt.-% of one or more other monomers in the presence of 20—80 parts by weight of rubber (relative to 100 parts by weight of graft copolymer) and

B. one or more graft copolymers, each obtained by polymerization of
75—90 parts by weight of a monomer mixture consisting of:
20—40 wt.-% acrylonitrile,
50—80 wt.-% styrene and
0—30 wt.-% of one or more other monomers in the presence of 10—25 parts by weight of rubber (relative to 100 parts by weight of graft copolymer) and

C. a copolymer of α-methylstyrene and acrylonitrile, obtained by polymerization of 60—80 parts by weight of α-methylstyrene and 20—40 parts by weight of acrylonitrile,

the rubber content of the polymer composition being between 10 and 30 wt.-% and the difference between the rubber contents of the graft copolymers at least 5 wt.-%.

According to the invention it is possible for the polymer composition to contain one or more stabilizers. By preference the polymer composition contains 1,1 - bis - (5 - tertbutyl - 4 - hydroxy - 2 - methylphenyl) butane as stabilizer. The quantity of this stabilizer relative to the total weight of the polymer composition is 0.05—2.0 wt.-%, by preference 0.05—1.0 wt.-%. In addition, the polymer composition may contain di-alkylthio-dipropionate in a quantity of 0.05—2.0 wt.-%, more in particular dilauryl- or distearylthio-di-propionate.

The invention will be elucidated on the basis of examples.

Examples I and II and Comparative Examples 1 through 7

An ABS polymer composition was prepared consisting of a mixture of 40 parts by weight of a graft copolymer of styrene and acrylonitrile on polybutadiene rubber and 60 parts by weight of a copolymer of α-methylstyrene and acrylonitrile, the total rubber content being 19.9 wt.-% relative to the total weight of the polymer composition.

To this ABS polymer composition various additives were added, as indicated in the table. From this table it appears that only a polymer composition according to the invention, i.e. the composition with stearylbehenate, has good release properties without the heat resistance being reduced.

The release properties of the compositions were determined visually. This determination is expressed in figures between 1 and 4. The values have the following significance:
1=during release from the mould the article broke
2=insufficient
3=fair
4=good

**0 105 562**

TABLE

| Additive | Vicat[1] (°C) | Izod[2] (kJ/m$^2$) | Release |
|---|---|---|---|
| I. 1% stearylbehenate | 106 | 18.1 | 3 |
| II. 1½% stearylbehenate | 106 | 20.9 | 4 |
| 1. 1% ethylenebisstearylamide (EBA) | 103 | 18.2 | 2 |
| 2. 1% metal stearate | 102 | 19.3 | 2 |
| 3. 1% EBA+1% metal stearate | 103 | 18.7 | 2 |
| 4. 1½% EBA+1½% metal stearate | 102 | 20.3 | 3 |
| 5. 1% stearyl stearate | 106 | 19.6 | 2 |
| 6. 1% stearic acid | 102 | 17.4 | 1 |
| 7. — | 106 | 17.1 | 2 |

[1] Vicat (tempered—5 kg ASTM D 1525)
[2] Izod (notched, ASTM D 256).

Examples 8—10

To ABS polymer compositions prepared in a way analogous with that of Examples I, II and 1 through 7, varying amounts of stearylbehenate were added.

The force required to remove an article from the mould is determined with the aid of a force transducer in the ejectors. For three ABS compositions, 8, 9 and 10, the ejection force was measured, the force required for removing an object without stearylbehenate from the mould being taken to be 100%.

| Example | Addition | Ejection force, % |
|---|---|---|
| 8 | no stearylbehenate | 100 |
| 9 | 1.0% stearylbehenate | 80 |
| 10 | 1.5% stearylbehenate | 70 |

The required ejection force therefore is 100%, 80% and 70% respectively. From this, it appears that the release properties have improved by 20% and 30% respectively by the addition of stearylbehenate.

**Claims**

1. Polymer composition on the basis of a graft copolymer, obtained by polymerization of a vinylaromatic compound and an unsaturated nitrile compound in the presence of a rubber, and an alkyl ester of a fatty acid, characterized in that the composition contains between 0.05 and 5 wt.% relative to the total weight of the polymer composition of an ester of an alcohol with a chain of 1—20 carbon atoms and a fatty acid with a chain of 22—30 carbon atoms.

2. Polymer composition according to claim 1, characterized in that the composition contains stearylbehenate.

3. Polymer composition according to claim 1 or 2, characterized in that the vinylaromatic compound is styrene and/or α-methylstyrene.

4. Polymer composition according to any of claims 1—3, characterized in that the unsaturated nitrile compound is acrylonitrile.

5. Polymer composition according to any of claims 1—4, characterized in that the polymer composition contains a copolymer of 20—40 wt.-% acrylonitrile and 60—80 wt.-% α-methylstyrene.

6. Polymer composition according to any of claims 1—5, characterized in that the polymer composition comprises:

A. one or more graft copolymers, each obtained by polymerization of 20—80 parts by weight of a monomer mixture consisting of:
20—40 wt.-% acrylonitrile,
50—80 wt.-% styrene and

4

0—30 wt.-% of one or more other monomers in the presence of 20—80 parts by weight of rubber (relative to 100 parts by weight of graft copolymer) and

B. one or more graft copolymers, each obtained by polymerization of 75—90 parts by weight of a monomer mixture consisting of:
20—40 wt.-% acrylonitrile
50—80 wt.-% styrene
0—30 wt.-% of one or more other monomers in the presence of 10—25 parts by weight of rubber (relative to 100 parts by weight of graft copolymer) and

C. a copolymer of α-methylstyrene and acrylonitrile obtained by polymerization of 60—80 parts by weight of α-methylstyrene and 20—40 parts by weight of acrylonitrile,

the rubber content of the polymer composition being between 10 and 30 wt.-% and the difference between the rubber contents of the graft copolymers being at least 5 wt.-%.

7. Polymer composition according to any of the claims 1—6, characterized in that the composition contains one or more stabilizers.

8. Polymer composition according to claim 7, characterized in that the stabilizer is 1,1 - bis - (5 - tertbutyl - 4 - hydroxy - 2 - methylphenyl)butane.

9. Article prepared in whole or in part from the polymer composition according to one of claims 1—8.


**Patentansprüche**

1. Polymerzusammensetzung auf der Basis eines Pfropfcopolymers, erhalten durch Polymerisation einer vinylaromatischen Verbindung und einer ungesättigten Nitrilverbindung in Gegenwart eines Kautschuks, und eines Alkylesters einer Fettsäure, dadurch gekennzeichnet, daß die Zusammensetzung zwischen 0,05 und 5 Gew.-%, bezogen auf das Gesamtgewicht der Polymerzusammensetzung, eines Esters eines Alkohols mit einer Kette von 1—20 Kohlenstoffatomen und einer Fettsäure mit einer Kette von 22—30 Kohlenstoffatomen enthält.

2. Polymerzusammensetzung nach Anspruch 1, dadurch gekennzeichnet, daß die Zusammensetzung Stearylbehenat enthält.

3. Polymerzusammensetzung nach Anspruch 1 oder 2, dadurch gekennzeichnet, daß die vinylaromatische Verbindung Styrol und/oder -Methylstyrol ist.

4. Polymerzusammensetzung nach einem der Ansprüche 1 bis 3, dadurch gekennzeichnet, daß die ungesättigte Nitrilverbindung Acrylnitril ist.

5. Polymerzusammensetzung nach einem der Ansprüche 1 bis 4, dadurch gekennzeichnet, daß die Polymerzusammensetzung ein Copolymer aus 20—40 Gew.-% Acrylnitril und 60—80 Gew.-% -Methylstyrol enthält.

6. Polymerzusammensetzung nach einem der Ansprüche 1 bis 5, dadurch gekennzeichnet, daß die Polymerzusammensetzung aus

A. einem oder mehreren Pfropfcopolymeren, von denen jedes durch Polymerisation von 20—80 Gew.-Teilen eines Monomerengemisches bestehend aus
20—40 Gew.-% Acrylnitril,
50—80 Gew.-% Styrol und
0—30 Gew.-% eines oder mehrerer anderer Monomerer in Gegenwart von 20—80 Gew.-Teilen Kautschuk (bezogen auf 100 Gew.-Teile Pfropfcopolymer) erhalten wurde, und

B. einem oder mehreren Pfropfcopolymeren, von denen jedes durch Polymerisation von 75—90 Gew.-Teilen eines Monomerengemisches bestehend aus
20—40 Gew.-% Acrylnitril,
50—80 Gew.-% Styrol,
0—30 Gew.-% eines oder mehrerer anderer Monomerer in Gegenwart von 10—25 Gew.-Teilen Kautschuk (bezogen auf 100 Gew.-Teile Pfropcopolymer) erhalten wurde, und

C. einem Copolymer von -Methylstyrol und Acrylnitril, erhalten durch Polymerisation von 60—80 Gew.-Teilen -Methylstyrol und 20—40 Gew.-Teilen Acrylnitril,

besteht, wobei der Kautschukgehalt der Polymerzusammensetzung zwischen 10 und 30 Gew.-% liegt und die Differenz zwischen den Kautschukgehalten der Pfropfcopolymers wenigstens 5 Gew.-% beträgt.

7. Polymerzusammensetzung nach einem der Ansprüche 1 bis 6, dadurch gekennzeichnet, daß die Zusammensetzung einen oder mehrere Stabilisatoren enthält.

8. Polymerzusammensetzung nach Anspruch 7, dadurch gekennzeichnet, daß der Stabilisator 1,1 - Bis - (5 - tertbutyl - 4 - hydroxy - 2 - methylphenyl)butan ist.

9. Gegenstand, hergestellt zur Gänze oder teilweise aus der Polymerzusammensetzung nach einem der Ansprüche 1 bis 8.

**Revendications**

1. Composition polymère à base d'un copolymère greffé qu'on obtient par polymérisation d'un composé vinyl-aromatique et d'un composé nitrile insaturé en présence d'un caoutchouc et d'un ester alkylique d'un acide gras, caractérisée en ce que la composition contient de 0,05 à 5% en poids, par rapport au poids total de la composition polymère, d'un ester d'un alcool ayant une chaîne de 1 à 20 atomes de carbone et d'un acide gras de 22 à 30 atomes de carbone.

2. Composition polymère selon la revendication 1, caractérisée en ce que qu'elle contient du béhénate de stéaryle.

3. Composition polymère selon la revendication 1 ou 2, caractérisé en ce que le composé vinyl-aromatique est le styrène et/ou l'alpha-méthylstyrène.

4. Composition polymère selon l'une quelconque des revendications 1 à 3, caractérisée en ce que le composé de nitrile insaturé est l'acrylonitrile.

5. Composition polymère selon l'une quelconque des revendications 1 à 4, caractérisée en ce que la composition polymère contient un copolymère de 20 à 40% en poids d'acrylonitrile et 60 à 80% en poids d'alpha-méthylstyrène.

6. Composition polymère selon l'une quelconque des revendications 1 à 5, caractérisée en ce que la composition polymère comprend:

A. Un ou plusieurs copolymères greffés dont chacun est obtenu par polymérisation de 20 à 80 parties en poids d'un mélange de monomères comprenant:
20 à 40% en poids d'acrylonitrile,
50 à 80% en poids de styrène, et
0 à 30% en poids d'un ou plusieurs autres monomères, en présence de 20 à 80 parties en poids de caoutchouc (pour 100 parties en poids de copolymère greffé) et

B. Un ou plusieurs copolymères greffés dont chacun est obtenu par polymérisation:
75 à 90 parties en poids d'un mélange de monomères consistant en:
20 à 40% en poids d'acrylonitrile,
50 à 80% en poids de styrène, et
0 à 30% en poids d'un ou plusieurs autres monomères en présence de 10 à 25 parties en poids de caoutchouc (pour 100 parties en poids de copolymère greffé) et

C. Un copolymère d'alphaméthylstyrène et d'acrylonitrile qu'on obtient par polymérisation de 60 à 80 parties en poids d'alphaméthylstyrène et 20 à 40 parties en poids d'acrylonitrile,

la teneur en caoutchouc de la composition polymère étant de 10 à 30% en poids et la différence entre les teneurs en caoutchouc des copolymères greffés étant d'au moins 5% en poids.

7. Composition polymère selon l'une quelconque des revendications 1 à 6, caractérisée en ce que la composition contient un ou plusieurs stabilisants.

8. Composition selon la revendication 7, caractérisée en ce que le stabilisant est le 1,1 - bis - (5 - t - butyl - 4 - hydroxy - 2 - méthylphényl) - butane.

9. Article préparé en totalité ou en partie avec la composition polymère selon l'une des revendications 1 à 8.